# EUROPÄISCHE PATENTSCHRIFT

(11) **EP 2 841 822 B1**
(45) Veröffentlichungstag und Bekanntmachung des Hinweises auf die Patenterteilung: **26.04.2017**
(21) Anmeldenummer: 12810119.3
(22) Anmeldetag: 28.11.2012
(51) Int. Cl.: F16J 15/08, F16J 15/12, F02F 11/00

(54) **TRÄGERRAHMENDICHTUNG MIT VERBESSERTER DICHTWIRKUNG**
CARRIER FRAME SEAL WITH IMPROVED SEALING EFFECT
JOINT À CADRE SUPPORT À EFFET D'ÉTANCHÉITÉ AMÉLIORÉ

(30) Priorität: 25.04.2012 DE 102012206775
(43) Veröffentlichungstag der Anmeldung: 04.03.2015
(73) Patentinhaber: Federal-Mogul Sealing Systems Gmbh, 57562 Herdorf (DE)
(72) Erfinder: SALAMEH, Ralf, 75053 Gondelsheim (DE)
(74) Vertreter: Becker Kurig Straus
(86) Internationale Anmeldenummer: PCT/EP2012/073769
(87) Internationale Veröffentlichungsnummer: WO 2013/159839

(56) Entgegenhaltungen:
- US-A1- 2005 023 768
- US-B1- 6 371 489

## Beschreibung

Die vorliegende Erfindung betrifft eine Trägerrahmendichtung für die Verwendung in Motor- und Zylinderbauteilen von Verbrennungskraftmaschinen, beispielsweise am Ventildeckel oder an der Ölwanne. Insbesondere betrifft die vorliegende Erfindung eine Trägerrahmendichtung mit verbesserter Dichtwirkung am Bereich der Verbindungsstege zwischen verschiedenen Bereichen des Trägerrahmens.

Trägerrahmendichtungen sind häufig als Dichtungen für Verbrennungsmotoren im Einsatz. Trägerrahmendichtungen haben den Vorteil, dass Dichtprofile aus Elastomermaterial an einen Trägerrahmen anvulkanisiert werden können und die Dichtung dadurch gut handhabbar wird. Darüber hinaus lassen sich unterschiedliche Lösungen zur Funktionstrennung realisieren. So kann die Dichtheit durch das Dichtprofil und zwischen den Dichtlippen liegenden Schottstegen erzielt werden. Schraubenkräfte hingegen werden von einem Trägerblech oder von integrierten Abstandshaltern übertragen. Derartige Trägerrahmen sind häufig überwiegend aus Aluminium oder Stahlträgerblechen gefertigt an welche ein Elastomerprofil stirnseitig anvulkanisiert ist. Von Vorteil bei diesen Dichtungen ist, dass unterschiedliche Dichtbereiche an einem Trägerblech kombiniert und anschließend einstückig zusammenhängend mit dem Trägerblech montiert werden können.

Bestimmte Dichtungsanordnungen machen es notwendig, dass der Dichtungsverlauf, auch in kleinen Bereichen, zwischen zwei Blechteilen verläuft. Die beiden durch das Dichtprofil abgetrennten Blechbereiche müssen aus Festigkeitsgründen im Allgemeinen durch Verbindungsstege zusammengehalten werden. Das gängige Verfahren zur Herstellung derartiger Trägerrahmen ist das Stanzen. Die Verbindungsstege werden im normalen Stanzprozess, bei dem der Rahmen gestanzt wird, vorgestanzt, d.h. beidseitig des Steges freigestanzt. Anschließend wird der Steg auf seine Nenndicke verprägt. Im Unterschied zu den restlichen Dichtungsbereichen, bei denen die Dichtung rein stirnseitig anvulkanisiert wird, verläuft die Dichtung an einigen Bereichen über einen abgeprägten Metallsteg. Die Stege können aufgrund von Kaltverfestigung und damit einhergehender, zunehmender Versprödung des Materials nur auf ein bestimmtes Maß verprägt werden. Derartige Flachdichtungen sind beispielsweise aus der US 6,371,489 ersichtlich.

Problematisch ist, dass insbesondere bei dünnen Trägerblechen der bleibende "Kanal" über dem Steg aus stanztechnischen Gründen (Kaltverfestigung und Versprödung des Materials) nicht die notwendige Tiefe beim Prägen erreicht, um eine bestmögliche Dichtungswirkung sicherzustellen. Das führt dazu dass sich das elastomere Dichtprofil, das direkt über dem Steg verläuft und dort wie auch an die restlichen Bereichen anvulkanisiert ist, nur unzureichend verformen kann. Dadurch ist die Materialbeanspruchung höher als in den übrigen Bereichen. Dies zeigt sich vor allem bei gelaufenen Dichtungen, die nach längerer Laufzeit begutachtet werden. Die über Stege verlaufenden Dichtbereiche sind deutlich stärker deformiert. Außerdem sind die Druckverformungsreste des Elastomermaterials wesentlich höher und somit ist auch die Dichtungswirkung unter Laufbedingungen deutlich geringer als in den Bereichen, bei denen die Elastomerdichtung nicht an Verbindungsstegen angeordnet ist.

Eine Aufgabe der vorstehenden Erfindung besteht daher in der Bereitstellung einer Trägerrahmendichtung mit verbesserter Dichtwirkung. Eine weitere Aufgabe besteht in der Bereitstellung einer Trägerrahmendichtung, worin in den Bereichen, an welchen das Dichtprofil an einen zwischen zwei Bereichen des Trägerrahmens ausgebildeten Verbindungssteg ausgebildet vorliegt, eine verbesserte Dichtwirkung bei längerer Laufzeit erzielt wird.

Erfindungsgemäß wird eine Trägerrahmendichtung bereitgestellt, die einen Trägerrahmen mit verschiedenen Trägerrahmenbereichen, einen zwischen zwei Trägerrahmenbereichen angeordneten Verbindungssteg von geringerer Dicke als die jeweiligen angrenzenden Trägerrahmenbereiche, und ein Dichtprofil umfasst, welches zwischen den beiden Trägerrahmenbereichen verläuft.

Die Länge LS des Stegs ist erfindungsgemäß größer als die Breite BD des Dichtprofils. Dadurch wird sichergestellt, dass das an dem Steg anliegende Dichtprofil nicht an Begrenzungen anliegt und somit nach längerer Laufzeit einem erhöhten Verschleiß an dieser Begrenzung unterzogen ist.

Bei beispielsweise einer Trägerrahmendichtung mit einem metallischen Trägerrahmen, dessen Stege mittels Prägen zwischen den Trägerrahmenbereichen ausgebildet sind, bilden die Trägerrahmenbereiche einen Kanal für den Verlauf des Dichtprofils. Der geprägte Stegbereich ist erfindungsgemäß breiter als der eigentliche für die Dichtung notwendige "Dichtkanal". Von Vorteil ist, dass die Prägekante nicht notwendigerweise an einer exakten Stelle erfolgen muss, da das Dichtprofil nicht an dieser Prägekante verläuft. Außerdem kann die Schichtdicke des Stegs bis zu einer minimalen Stegdicke abnehmen, so dass Kanten grundsätzlich vermieden werden. Die minimale Dicke wird dann sicher im Bereich des Dichtkanals über den das Dichtprofil verläuft erreicht. Ein weiterer Vorteil ist, dass die in den Anbindungsbereichen notwendigen Radien größer ausfallen können und den eigentlichen Kanal in der Größe nicht beeinträchtigen. Eine abnehmende Dicke der Stege bis zur minimalen Stegdicke ist außerdem für eine erhöhte Stabilität und Lebensdauer der erfindungsgemaßen Trägerrahmendichtung förderlich, da andernfalls kleine Relativbewegungen oder Schwingungen Dauerbrüche an der Stegkante verursachen können.

In den Figuren zeigt
die Fig. 1 eine Trägerahmendichtung gemäß dem Stand der Technik nach längerer Laufzeit;
die Fig. 2 eine schematische Darstellung einer Trägerrahmendichtung gemäß dem Stand der Technik;
die Fig. 3 die Querschnittsansicht einer herkömmlichen Trägerrahmendichtung;
die Fig. 4 die Draufsicht auf eine Trägerrahmendichtung gemäß einer bevorzugten Ausführungsform der vorliegenden Erfindung;
die Fig. 5 die Draufsicht auf eine Trägerrahmendichtung gemäß einer weiteren Ausführungsform der vorliegenden Erfindung;
die Fig. 6 die Draufsicht auf eine Trägerrahmendichtung gemäß einer Ausführungsform der vorliegenden Erfindung;
die Fig. 7 die Draufsicht auf eine Trägerrahmendichtung gemäß einer weiteren Ausführungsform der vorliegenden Erfindung; und
die Fig. 8 die Draufsicht auf eine Trägerrahmendichtung gemäß einer bevorzugten Ausführungsform der vorliegenden Erfindung.

Gemäß einer bevorzugten Ausführungsform der vorliegenden Erfindung wird eine Trägerrahmendichtung bereitgestellt. Die Trägerrahmendichtung umfasst einen Trägerrahmen mit mindestens einem ersten und einem zweiten Trägerrahmenbereich; einen Steg, welcher den ersten Trägerrahmenbereich und zweiten Trägerrahmenbereich verbindet und welcher eine geringere Dicke als die angrenzenden Trägerrahmenbereiche aufweist; und ein zwischen dem ersten Trägerrahmenbereich und zweiten Trägerrahmenbereich verlaufendes Dichtprofil. Eine Länge LS des Stegs ist größer als eine Breite BD des Dichtprofils.

Eine Trägerrahmendichtung kommt üblicherweise in Verbrennungskraftmaschinen, insbesondere bei Zylinderbauteilen, zum Einsatz. Trägerrahmendichtungen bestehen hierfür üblicher weise aus einem Tragerrahmen aus einer mit einem angespritzten Dichtsystem. Der Trägerrahmen kann beispielsweise aus Stahl oder Aluminium hergestellt werden, jedoch können auch verschiedene Verbundmaterialien zum Einsatz gelangen. Verbindungsstege zwischen einzelnen Bereichen des Trägerrahmens können durch seitliches Freistanzen und anschließendes Verprägen erhalten werden. Entsprechende Verfahren zur Herstellung von Trägerrahmen sind dem Fachmann geläufig.

Bei dem Dichtprofil handelt es sich üblicherweise um ein Elastomerdichtprofil, welches beispielsweise durch Vulkanisieren unmittelbar auf an eine oder beide Seiten des Trägerrahmens angebracht werden kann. So können Dichtprofile beispielsweise Stege zwischen verschiedenen Bereichen des Trägerrahmens vollständig umhüllen. Dichtprofile können verschiedene Formen einnehmen. Üblicherweise weist das Dichtprofil flächige Dichtbereiche und oder Dichtbereiche mit einer oder mehreren Dichtlippen auf. Mehrere, zwischen den Dichtlippen angeordnete Schottstege, können für Stabilisierungszwecke vorhanden sein, wobei die Schottstege neben der Aufgabe der Stabilisierung der Dichtlippen auch die Aufgabe haben, unterschiedliche Dichtungsbereiche (Dichtungskammern) voneinander abzugrenzen. Es werden so mehrere geschlossene Bereiche durch die Querschotts erzeugt, die verhindern sollen, dass z.B. Medium, das durch eine beschädigte Stelle an der ersten Dichtlippe eintritt, zwischen den beiden Dichtlippen umläuft und dann vielleicht an einer anderen "weit" entfernten Stelle mit Beschädigung an der zweiten Dichtlippe austreten kann.

Geeignete Elastomermaterialien umfassen beispielsweise Silikon aber auch organische Werkstoffe, wie beispielsweise Fluorkautschuk, Acrylatkautschuk, Polyacrylat-Acrylharz, Polyacrylat, Ethylenacrylat, Ethylenpropylen und/oder Hydriernitril auf Das Dichtprofil kann bereichsweise aus verschiedenen organischen Elastomerwerkstoffen bestehen. Derartige Dichtungen können preisgünstig hergestellt werden. Eine derartige Dichtung ist bevorzugt nicht starr, wodurch die Montage erschwert und bei der Montage die Dichtung beschädigt werden kann. Das Dichtprofil kann beispielsweise mittels eines dem Fachmann geläufigen Spritzverfahren ausgebildet und an Verbindungsstegen angebracht werden. So kann ein Trägerrahmen bereitgestellt werden, welcher kontinuierlich einer Spritzvorrichtung zugeführt wird, die in einem Spitzverfahren zyklisch einseitig oder beidseitig einen organischen Elastomerwerkstoff als Dichtung auf den Träger aufbringt. Im Anschluss wird die Dichtung frei gestanzt.

Erfindungsgemäß wird dadurch, dass die Länge LS des Stegs größer als eine Breite BD des Dichtprofils ist, sichergestellt, dass der Steg an keine Kante mit beispielsweise eine der dickeren angrenzenden Trägerrahmenbereiche anstößt, wodurch ein erhöhter Verschleiß der Trägerrahmendichtung bedingt wird. Der Steg kann erfindungsgemäß über seine gesamte Länge eine konstante Dicke aufweisen. Bevorzugt weist der Steg eine von außen zum Auflagebereich des Dichtprofils hin kontinuierlich abnehmende Dicke auf, wobei am eigentlichen Auflagebereich des Dichtprofils die Schichtdicke des Stegs einen minimalen Wert annimmt und vorzugsweise konstant ist. Der Querschnitt des Stegs in Längsrichtung betrachtet kann rechteckig sein. Vorzugsweise sind die Kanten abgerundet. Vorzugsweise weist der Querschnitt des Stegs eine im Wesentlichen elliptische Form auf Der Steg weist ferner ein bestimmtes Verhältnis der Länge zu der Breite auf. Das Verhältnis der Steglänge zu der Stegbreite kann beispielsweise 2:1 bis 10:1 und bevorzugt 3:1 bis 9:1 betragen. Bevorzugte Verhältnisse der Steglänge zu der Stegbreite sind hierbei 4:1, 5:1, 6:1 oder 7:1.

Die vorliegende Erfindung verbessert die Dichtfähigkeit. Das Elastomermaterial der Dichtung kann nämlich aufgrund eines darunterliegenden Steges höher belastet und der "Druckverformungsrest" größer sein, d.h. die Dichtung kommt nach der Demontage nicht mehr so hoch wie in anderen Bereichen. Dies bedeutet, dass auch die Dichtfähigkeit bei herkömmlichen Dichtungen verschlechtert ist.

Gemäß einer weiteren Ausführungsform schneidet eine Längsrichtung des Dichtprofils eine Längsrichtung des Stegs in einem Winkel α von im Wesentlichen 90°. Der Steg stellt hierbei die kürzest mögliche Verbindung zwischen dem ersten und zweiten Trägerrahmenbereich her. Ein Winkel von im wesentlichen 90° umfasst hierbei Winkel von 60° bis 90°, vorzugsweise 70° bis 90°, 80° bis 90°, 85° bis 90°, 86° bis 90°, 87° bis 90°, 88° bis 90° und 89° bis 90°.

Gemäß einer bevorzugten Ausführungsform schneidet eine Längsrichtung des Dichtprofils eine Längsrichtung des Stegs in einem Winkel α von im Wesentlichen 45° oder weniger. Der Winkel α ist hierbei vorzugsweise 5° bis 45°, 10° bis 45°, 15° bis 35°, und 20° bis 35°. Am meisten bevorzugt sind Winkel α von 21°, 22°, 23°, 24°, 25 °, 26°, 27°, 28°, 29°, 30°, 31°, 32°, 33° und 34°,

Gemäß einer weiteren bevorzugten Ausführungsform, weist das Dichtprofil mindestens eine erste und eine zweite Dichtlippe aufweist, wobei die erste Dichtlippe in einem ersten Bereich über dem Steg vorliegt, und die zweite Dichtlippe in einem zweiten Bereich über dem Steg vorliegt. Es ist klar, dass der räumliche Begriff "über" lediglich aus der Betrachtungsweise der Trägerrahmendichtung resultiert. Die jeweilige Anordnung der Dichtlippen über (und/oder unter) einem Steg definiert die verschiedenen Bereiche. Bei einem Winkel α von 90° beispielsweise sind die Bereiche an der gleichen Lage bezüglich der Längsrichtung des Dichtprofils angeordnet. Es wird klar sein, dass bei einem kleinen Winkel α, beispielsweise 20°, und gleichzeitigem großem Verhältnis der Steglänge zu der Stegbreite, beispielsweise 8:1, die Bereiche an verschiedenen Lagen bezüglich der der Längsrichtung des Dichtprofils angeordnet sind. Darüber hinaus können mehr Dichtlippen vorliegen. Beispielsweise können 5, 4, oder 3 Dichtlippen vorliegen, woraus sich eine entsprechende Zahl an Bereichen ergibt.

Gemäß einer bevorzugten Ausführungsform der vorliegenden Erfindung liegt der erste Bereich und der zweite Bereich auf verschiedenen Seiten einer Orthogonalen zu der Längsrichtung des Dichtprofils. Auf verschiedenen Seiten einer Orthogonalen heißt hierbei, dass die Bereiche die Orthogonale nicht berühren. Dadurch wird sichergestellt, dass immer nur eine Dichtlippe im Schnitt gesehen über den Steg verläuft. Daraus resultiert die minimalste Beeinträchtigung durch den notwendigen Verbindungssteg, da über den gesamten Dichtungsverlauf betrachtet, immer eine Dichtlippe ihre Funktion optimal erfüllen kann und nicht durch einen Steg beeinträchtigt wird. Es ist klar, dass bei dieser Ausgestaltung der Trägerrahmendichtung die Länge LS des Stegs nicht notwendigerweise größer als eine Breite BD des Dichtprofils sein muss. Die Länge LS des Stegs kann auch der Breite BD des Dichtprofils entsprechen.

Gemäß einer bevorzugt Ausführungsform der vorliegenden Erfindung wird eine Trägerrahmendichtung bereitgestellt, in welcher ein erster Schottsteg entlang der Orthogonalen ausgebildet vorliegt und die mindestens erste und zweite Dichtlippe verbindet. Dadurch wird eine optimale Trennung des mindestens einen ersten Bereichs und eines zweiten Bereichs erreicht, so dass bei einem Bruch einer Dichtlippe in einem Bereich hoher Beanspruchung, worin die Dichtlippe über einen Steg verläuft, eine wirksame Abgrenzung von dem nächstliegenden Bereich hoher Beanspruchung erzielt wird. Durch die Anordnung des Schottstegs orthogonal zu der Dichtlippe wird darüber hinaus eine geringst mögliche Beanspruchung im Fall einer Beschädigung einer Dichtlippe erzielt. Alternativ können ein oder mehrere Schottstege schräg zur Dichtlippe angeordnet sein.

Gemäß einer weiteren Ausführungsform der vorliegenden Erfindung kann die vorstehend erwähnte Isolierung eines Bereichs hoher Beanspruchung noch weiter verbessert werden, wenn der erste Bereich und der zweite Bereich von zweiten Schottstegen umfasst werden. Idealerweise Verlaufen die Schottstege direkt angrenzend an den ersten bzw. zweiten Bereich, jedoch können sie auch beabstandet davon vorliegen.

Gemäß einer weiteren Ausführungsform verläuft das Dichtprofil oberhalb und unterhalb des Stegs. Vorzugsweise umgibt/umhüllt das Dichtprofil den Steg.

Gemäß einer Ausführungsform ist der Trägerrahmen aus Stahl oder Aluminium hergestellt, wodurch eine einfache Herstellung des Stegs, beispielsweise mittels Prägen, erreicht werden kann und dabei beispielsweise entstehende Kanten nicht zu einer erhöhten Abnutzung des auf dem Steg aufliegenden oder diesen umgebenden Dichtprofils führen.

Gemäß einer weiteren Ausführungsform sind der erste Trägerrahmenbereich und der zweite Trägerrahmenbereich durch weitere Stege verbunden. Es ist klar, diese die Stege voneinander verschieden sein können, so dass eine beliebige Anzahl von Stegen mit verschiedenem Winkel α und verschiedenem Verhältnis der Länge zur Breite kombiniert werden können.

### Detaillierte Beschreibung der Erfindung

Die folgenden Figuren dienen zur beispielhaften Erläuterung der Erfindung ohne diese darauf zu begrenzen.

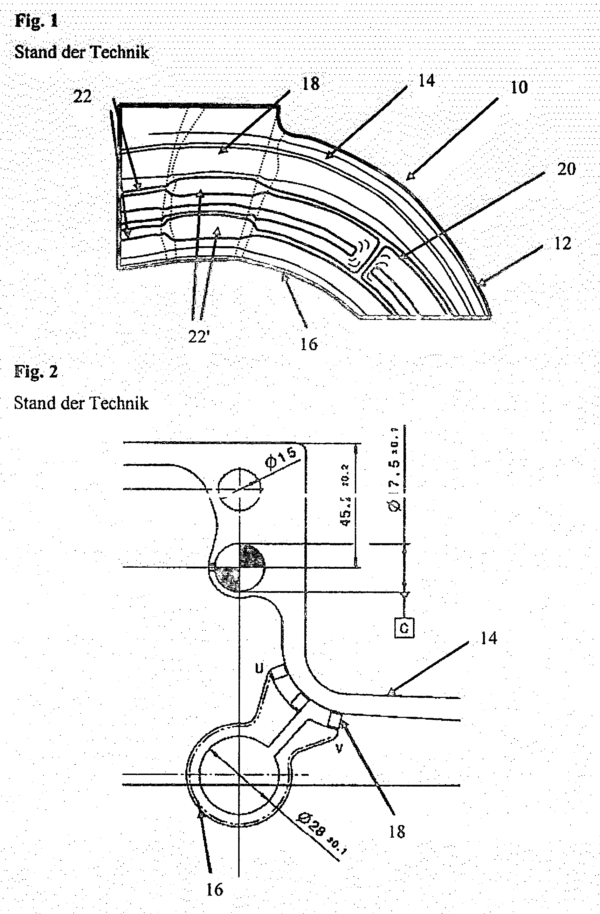

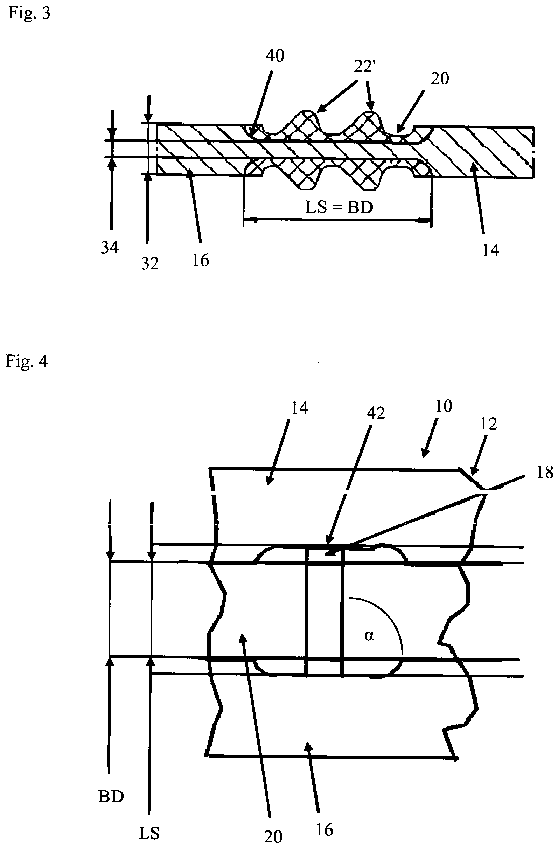

Die Fig. 1 zeigt eine Trägerahmendichtung 10 gemäß dem Stand der Technik nach längerer Laufzeit. Der Trägerrahmen 12 der Trägerahmendichtung 10 umfasst einen ersten Trägerrahmenbereich 14 und zweiten Trägerrahmenbereich 16. Ein Steg 18 verbindet den ersten und zweiten Trägerrahmenbereich 14, 16. In dem Dichtkanal, welcher zwischen den beiden Trägerrahmenbereichen 14, 16 angeordnet ist, verläuft das Dichtprofil 20 mit zwei Dichtlippen 22, 22'. Es ist deutlich zu erkennen, dass die Dichtlippen in einem stegfreien Bereich 22 geringerem Verschleiß unterzogen sind als die über den Steg 18 verlaufenden Dichtlippen 22'. So sind die Dichtlippen im Bereich 22' wesentlich stärker verformt als im Bereich 22. Aus der in Fig. 2 gezeigten schematischen Darstellung einer herkömmlichen Trägerrahmendichtung ist ersichtlich, dass die unter dem Dichtprofil (nicht gezeigt) verlaufenden Stege 18, die kürzeste Verbindung zwischen ersten zweiten Trägerrahmenbereich 14, 16 darstellen bei welcher ein Winkel α (nicht gezeigt) näherungsweise 90° beträgt. Aus der in Fig. 3 gezeigten Querschnittsansicht einer herkömmlichen Trägerrahmendichtung im Stegbereich geht hervor, dass der zwischen den Trägerrahmenbereich 14, 16 verlaufende Steg 18 die gleiche Länge LS und Breite BD aufweist. Das Dichtprofil 20 ist außerdem in die Vertiefung eingepasst, welche aus der geringeren Dicke 34 des Stegs 18 im Vergleich zur Dicke 32 der beiden Trägerrahmenbereiche 14, 16 herrührt, und verläuft auf beiden Seiten des Stegs 18. Die Vertiefung weißt ferner Radien 40 auf, um die Kerbwirkung zu verringern.

In der Trägerrahmendichtung 10 aus Fig. 4 verbindet der Steg 18 den ersten Trägerrahmenbereich 14 und den zweiten Trägerrahmenbereich 20. Über dem Steg 18 verläuft das Dichtprofil 20. Die Länge LS des Stegs 18 ist größer als die Breite BD des Dichtprofils 20, wodurch eine erhöhte Gestaltungsfreiheit bezüglich der Führung des Dichtprofils 20 erzielt wird. Außerdem liegt der Kantenbereich 42, an welchem der Steg 18 in die beiden Trägerrahmenbereiche 14, 16 übergeht, von dem Dichtprofil 20 beabstandet vor, so dass eine mechanische Belastung des Dichtprofils an dem Kantenbereich 42 vermieden werden kann. In dieser Ausführungsform schneidet die Längsrichtung des Dichtprofils die Längsrichtung des Stegs in einem Winkel α von 90°.

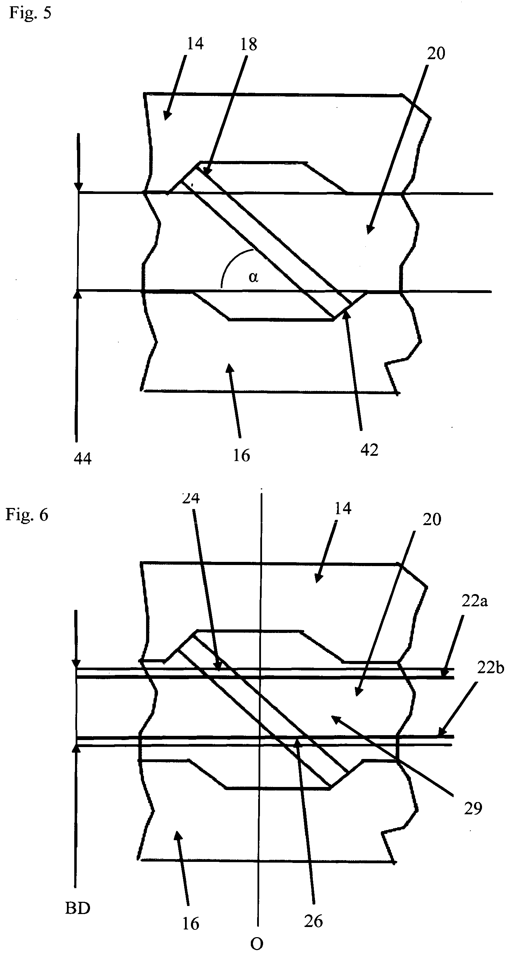

Aus der Fig. 5 ist ersichtlich, dass der Steg 18 den ersten Trägerrahmenbereich 14 und den zweiten Trägerrahmenbereich 20 in einem Winkel α von ungefähr 45° verbindet. 44 zeigt die maximale mögliche Breite des Dichtprofils 20 an. In dieser Ausführungsform liegt der Kantenbereich 42 ebenfalls von dem Dichtprofil 20 beabstandet vor.

Die Fig. 6 zeigt die Trägerrahmendichtung 10 der Fig. 5. Das Dichtprofils 20 weist eine erste Dichtlippe 22a und eine zweite Dichtlippe 22b auf. Die erste Dichtlippe 22a liegt in einem ersten Bereich 24 über dem Steg 18 vor, die zweite Dichtlippe 22b liegt in einem zweiten Bereich 26 über dem Steg 18 vor. Der erste Bereich 24 und der zweite Bereich 26 liegen auf verschiedenen Seiten einer Orthogonalen O zu der Längsrichtung des Dichtprofils. Damit wird sichergestellt, dass beide Dichtlippen 22a, 22b nicht gleichzeitig über den Steg 18 verlaufen und bei Verwendung der Trägerrahmendichtung 10 an gleichen Stellen/Bereichen bezüglich der Orthogonalen O beeinträchtigt werden können.

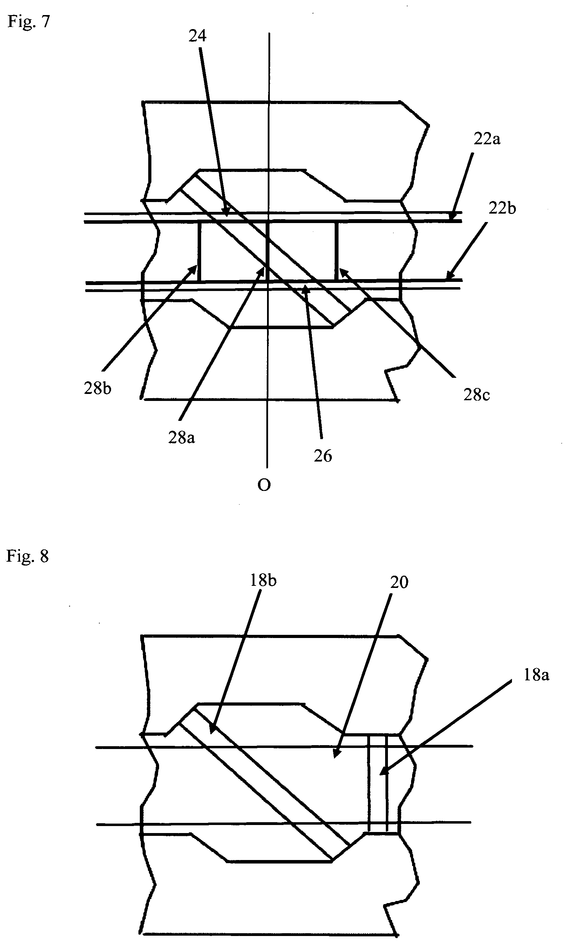

Die Fig. 7 zeigt eine Trägerrahmendichtung 10 aus Fig. 6, worin erste Dichtlippe 22a mit der zweiten Dichtlippe 22b durch Schottstege 28a, 28b, 28c verbunden ist. Die Schottstege 28a, 28b, 28c verlaufen orthogonal zur Längsrichtung des Dichtprofils 20. Ein erster Schottsteg 28a ist entlang der Orthogonalen O ausgebildet und verbindet die erste mit der zweiten Dichtlippe 22a, 22b verbindet. Somit wird sichergestellt, dass die Bereiche 24, 26, welche bei Verwendung der Trägerrahmendichtung 10 eine erhöhte Belastung erfahren, voneinander abgetrennt sind. 7. Der erste Bereich 24 und der zweite Bereich 26 werden von zweiten Schottstegen 28b, 28c derart umfasst, dass die Bereiche 24, 26 von Bereichen niedriger Belastung, d.h. von dem Steg 18 beabstandeten Bereichen des Dichtprofils, getrennt vorliegen.

Aus der Fig. 8 ist eine Trägerrahmendichtung 10 ersichtlich, bei welcher die beiden Trägerrahmenbereiche 14, 16 durch zwei Stege 18a, 18b getrennt werden.

## Patentansprüche

1. Trägerrahmendichtung (10), umfassend
einen Trägerrahmen (12) mit mindestens einem ersten und einem zweiten Trägerrahmenbereich (14, 16);
einen Steg (18), welcher den ersten Trägerrahmenbereich (14) und zweiten Trägerrahmenbereich (16) verbindet und welcher eine geringere Dicke (32, 34) als die angrenzenden Trägerrahmenbereiche aufweist; und
ein zwischen dem ersten Trägerrahmenbereich (14) und zweiten Trägerrahmenbereich (16) verlaufendes Dichtprofil (20),
**dadurch gekennzeichnet, dass** eine Länge (LS) des Stegs (18) größer als eine Breite (BD) des Dichtprofils (20) ist, dass eine Längsrichtung des Dichtprofils eine Längsrichtung des Stegs in einem Winkel (α) von im Wesentlichen 45° oder weniger schneidet, und dass das Dichtprofil (20) mindestens eine erste und eine zweite Dichtlippe (22a, 22b) aufweist, wobei die erste Dichtlippe (22a) in einem ersten Bereich (24) über dem Steg (18) vorliegt, und die zweite Dichtlippe (22b) in einem zweiten Bereich (26) über dem Steg (18) vorliegt.

2. Trägerrahmendichtung nach Anspruch 1, wobei der erste Bereich (24) und der zweite Bereich (26) auf verschiedenen Seiten einer Orthogonalen zu der Längsrichtung des Dichtprofils liegen.

3. Trägerrahmendichtung nach Anspruch 2, wobei ein erster Schottsteg (28a) entlang der Orthogonalen ausgebildet vorliegt und die mindestens erste und zweite Dichtlippe verbindet.

4. Trägerrahmendichtung nach Anspruch 3, wobei der erste Bereich (24) und der zweite Bereich (26) von zweiten Schottstegen (28b, 28c) umfasst werden.

5. Trägerrahmendichtung nach einem der vorstehenden Ansprüche, wobei das Dichtprofil (20) oberhalb und unterhalb des Stegs (18) verläuft.

6. Trägerrahmendichtung nach einem der vorstehenden Ansprüche, wobei der Trägerrahmen (12) aus Stahl oder Aluminium hergestellt ist.

7. Trägerrahmendichtung nach einem der vorstehenden Ansprüche, wobei der erste Trägerrahmenbereich (14) und der zweite Trägerrahmenbereich (16) durch weitere Stege (18a, 18b) verbunden sind.

## Claims

1. A carrier frame seal (10), comprising
a carrier frame (12) with at least a first and a second carrier frame region (14, 16);
a web (18), which connects the first carrier frame region (14) and second carrier frame region (16) and which has a smaller thickness (32, 34) than the adjoining carrier frame regions; and
a sealing profile (20) running between the first carrier frame region (14) and second carrier frame region (16),
**characterized in that** a length (LS) of the web (18) is greater than a width (BD) of the sealing profile (20), that a longitudinal direction of the sealing profile intersects a longitudinal direction of the web at an angle (α) of substantially 45° or less, and that the sealing profile (20) has at least a first and a second sealing lip (22a, 22b), wherein the first sealing lip (22a) is present in a first region (24) over the web (18), and the second sealing lip (22b) is present in a second region (26) over the web (18).

2. The carrier frame seal according to Claim 1, wherein the first region (24) and the second region (26) lie on different sides of an orthogonal to the longitudinal direction of the sealing profile.

3. The carrier frame seal according to Claim 2, wherein a first partition web (28a) is present, formed along the orthogonal and connecting the at least first and second sealing lip.

4. The carrier frame seal according to Claim 3, wherein the first region (24) and the second region (26) are encompassed by second partition webs (28b, 28c).

5. The carrier frame seal according to one of the preceding claims, wherein the sealing profile (20) runs above and below the web (18).

6. The carrier frame seal according to one of the preceding claims, wherein the carrier frame (12) is produced from steel or aluminium.

7. The carrier frame seal according to one of the preceding claims, wherein the first carrier frame region (14) and the second carrier frame region (16) are connected by further webs (18a, 18b).

## Revendications

1. Joint à cadre support (10), comprenant :
un cadre support (12) comportant au moins une première et une deuxième zone de cadre support (14,16) ;
un gradin (18), qui relie la première zone de cadre support (14) et la zone deuxième de cadre support (16) et qui présente une épaisseur moindre (32,34) que les zones de cadre support juxtaposées ;
un profilé de joint (20) s'étendant entre la première zone de cadre support (14) et la deuxième zone de cadre support (16) ;
**caractérisé en ce que** une longueur (L) du gradin (18) est plus grand que une largeur (BD) du profilé de joint (20), **en ce que** une direction de longueur du profilé d'étanchéité coupe en intersection une direction longitudinale du gradin à un angle (α) essentiellement de 45° ou moins, et **en ce que** le profilé d'étanchéité (20) présente au moins une première et une deuxième lèvre d'étanchéité (22a,22b), dans lequel la première lèvre d'étanchéité (22a) est située dans une première zone (24) au-dessus du gradin (18) et la deuxième lèvre d'étanchéité (22b) est située dans une deuxième zone (26) au-dessus du gradin (18).

2. Joint à cadre support selon la revendication 1, dans lequel la première zone (24) et la deuxième zone (26) sont situées sur des côté différents d'une orthogonale par rapport à la direction longitudinale du profilé de joint.

3. Joint à cadre support selon la revendication 2, dans lequel une première entretoise (28a) est présente le long de l'orthogonale et relie au moins la première et la deuxième lèvre d'étanchéité.

4. Joint à cadre support selon la revendication 3, dans lequel la première zone (24) et la deuxième zone (26) sont englobées par les deuxièmes entretoises (28b,28c).

5. Joint à cadre support selon une des revendications précédentes, dans lequel le profilé d'étanchéité (20) s'étend au-dessus et au-dessous du gradin (18).

6. Joint à cadre support selon une des revendications précédentes, dans lequel le cadre support (12) est fabriqué en acier ou aluminium.

7. Joint à cadre support selon une des revendications précédentes, dans lequel la première zone de cadre support (14) et la deuxième zone de cadre support (16) sont reliées par l'intermédiaire de gradins supplémentaires (18a,18b).
